# FASCICULE DE BREVET EUROPEEN

(11) **EP 3 558 552 B1**
(45) Date de publication et mention de la délivrance du brevet: **06.01.2021**
(21) Numéro de dépôt: 17811640.6
(22) Date de dépôt: 20.11.2017
(51) Int. Cl.: B07C 3/02, B07C 5/36

(54) **CHARIOT NAVETTE A PLATEAU STRUCTURE POUR LE TRI DE COLIS HORS NORME**
FLURFÖRDERZEUG MIT PLATTFORM ZUM SORTIEREN VON PAKETEN MIT SONDERGRÖSSE
SHUTTLE WITH PLATFORM FOR SORTING OVERSIZE PARCLES

(30) Priorité: 22.12.2016 FR 1663108
(43) Date de publication de la demande: 30.10.2019
(73) Titulaire: Solystic, 92220 Bagneux (FR)
(72) Inventeur: MIETTE, Emmanuel, 95210 Saint Gratien (FR); CHIROL, Luc, 75016 Paris (FR)
(74) Mandataire: Cabinet Prugneau-Schaub
(86) Numéro de dépôt international: PCT/FR2017/053168
(87) Numéro de publication internationale: WO 2018/115611

(56) Documents cités:
- WO-A2-2007/100686
- FR-A1- 2 268 575
- US-B1- 6 190 100

## Description

### Domaine technique

Le domaine de l'invention est celui des centres logistiques de traitement des colis dans lesquels des colis sont réceptionnés, triés et regroupés en vue de leur distribution.

### Technique antérieure

En particulier, l'invention concerne un chariot navette pour centre logistique de tri de colis, comportant un plateau pour porter un colis à trier. Un tel chariot navette est par exemple connu du document de brevet WO2014/057182 pour transporter des colis entre un point de chargement et un point de déchargement.

Un autre type de chariot navette pour le transport de colis est également décrit dans le brevet US 6,190,100.

Les colis transportés par ces chariots navettes sont généralement des paquets de différentes tailles mais de forme générale parallélépipédique.

Une adresse de livraison du colis est apposée sur une face du paquet. Une image numérique de cette adresse de livraison peut être formée avec un scanner portatif par exemple et envoyée à l'unité de traitement de données pour une reconnaissance automatique et l'identification d'un point de déchargement du colis qui correspond à cette adresse de livraison dans le processus de tri automatique. Un code de tri sous forme de code à barres peut également être apposé sur une face du colis.

Mais le spectre des colis à traiter dans un tel centre de tri tend à s'étendre et il existe des colis avec des formes et des tailles très différentes d'un parallélépipède, comme un tapis roulé en forme de cylindre ou encore une plaque rigide de grande dimension par exemple, cette énumération n'étant pas limitative.

Dans le document de brevet indiqué ci-dessus, les chariots navettes comportent un plateau adapté pour porter un colis unique qui présente plutôt la forme d'un parallélépipède et il n'est pas prévu pour porter par exemple un tapis roulé en forme de long cylindre.

### Exposé de l'invention

Le but de l'invention est donc de proposer un chariot navette à plateau structuré mieux adapté pour porter un large spectre de colis de formes diverses.

A cet effet, l'invention a pour objet un chariot navette pour centre logistique de tri de colis comportant un plateau pour porter un colis à trier, le plateau comportant une partie centrale en forme de gouttière à section transversale en V et deux parties latérales de part et d'autre de la partie centrale et qui s'étendent dans un même plan horizontal, dans lequel le corps du plateau comprend des membrures formant deux peignes disposés en opposition, les dents des peignes s'étendant parallèlement les unes aux autres de la partie centrale du corps respectivement vers le bord des parties latérales.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une vue schématique en plan de la plateforme d'un centre logistique de tri de colis.
- la figure 2 est une vue schématique en coupe de la plateforme de la figure 1.
- la figure 3 illustre un chariot navette à roulettes.
- la figure 4 illustre schématiquement en vue de côté du plateau du chariot à roulettes.
- la figure 5 illustre schématiquement en vue de devant du plateau du chariot à roulettes.
- la figure 6 illustre de façon schématique une vue de dessus du plateau du chariot à roulettes.

### Description des modes de réalisation

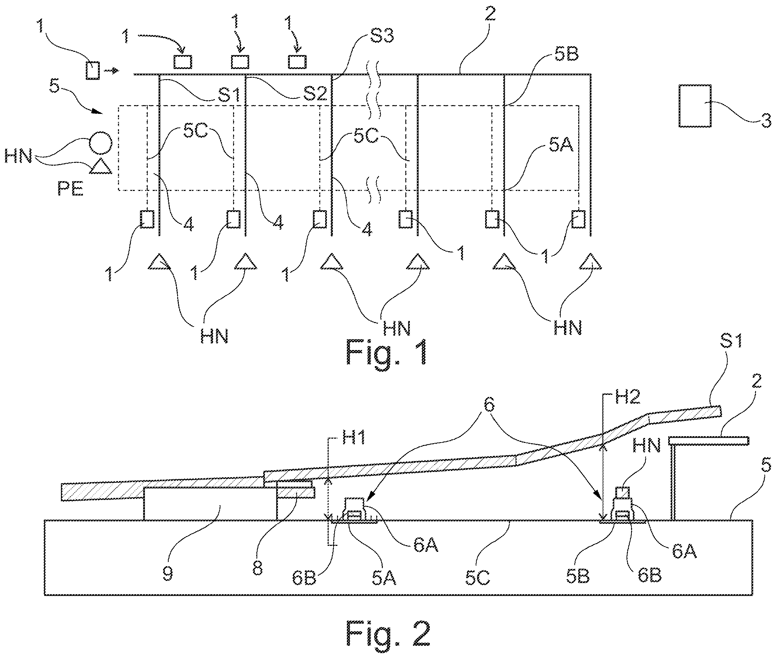

Sur la figure 1, on a illustré très schématiquement la topologie d'un centre logistique de tri de colis 1 avec ici un convoyeur de tri 2 et des sorties de tri S1,S2,S3.

On a représente ici qu'un petit nombre de sorties de tri sachant qu'il peut y avoir plusieurs dizaines ou centaines de sorties de tri desservies par le convoyeur.

Le convoyeur de tri peut être un convoyeur à bandes, à rouleaux, à tapis ou autre alimenté ici en colis mécanisables depuis une de ses extrémités (à gauche sur la figure 1) et dans lequel les colis 1 sont déplacés en série à plat.

Le convoyeur de tri est piloté par une unité de contrôle/commande 3 adaptée pour reconnaître automatiquement l'adresse de destinataire d'un colis et en fonction d'un plan de tri orienter ce colis vers la sortie de tri correspondante pour trier ce colis.

La reconnaissance automatique d'adresse peut se faire par exemple à partir d'une image numérique de l'adresse de destinataire apposée sur le colis qui a été saisie lors de l'introduction du colis 1 dans le convoyeur de tri 2.

Comme illustré sur les figures 1 et 2, le convoyeur de tri 2 est ici monté en hauteur sur la plateforme 5 du centre logistique et chaque sortie de tri comme SI est munie d'une chute de tri 4 sous la forme d'une rampe inclinée depuis la sortie de tri SI du convoyeur de tri jusqu'à la plateforme en contrebas du convoyeur de tri.

L'équipement de tri selon l'invention est conçu pour trier à flux réduit des colis non mécanisables appelés colis hors normes référencés HN et illustrés sur la figure 1 par un triangle et un cercle à la différence des colis mécanisables 1 représentés par un rectangle.

Ces colis hors norme HN sont par exemple des colis qui présentent une forme, un poids ou des dimensions incompatibles avec les caractéristiques de fonctionnement du convoyeur 2. Il peut s'agir de cylindres, plaques, rouleaux etc...

Les colis hors normes HN qui arrivent au point d'entrée PE du centre logistique (à gauche sur la figure 1) sont ici chargés un par un par un Opérateur sur un chariot navette 6 à roulettes.

L'adresse de destinataire du colis hors norme peut être scannée par l'Opérateur et envoyée à l'unité de contrôle/commande 3 pour une détermination automatique d'une sortie de tri correspondante suivant un plan de tri des colis mécanisables.

Suite à quoi l'unité de contrôle/commande est apte à commander à distance le déplacement, sur la plateforme 5 du centre logistique, du chariot navette 6 chargé avec le colis hors normes HN pour le diriger vers la sortie de tri du convoyeur de tri qui correspond à cette adresse de destinataire dans le plan de tri des colis mécanisables.

Comme illustré sur les figures 1 et 2, la plateforme 5 du centre logistique comprend une première allée de circulation 5A pour les chariots navettes 6 qui longe le convoyeur de tri 2 en passant sous les chutes de tri 4 et une seconde allée de circulation 5B pour les chariots navettes 6 qui est parallèle à la première allée de circulation 5A. Comme illustré sur la figure 1, les allées de circulation 5A,5B croisent sensiblement perpendiculairement les chutes de tri.

L'allée de circulation 5B est disposée entre le convoyeur de tri 2 et l'allée de circulation 5A sous les chutes de tri de telle sorte que l'allée de circulation 5A est à plus faible hauteur H1 sous les rampes de sortie de tri que l'allée de circulation 5B, la hauteur sous rampe de l'allée de circulation 5B est indiquée par H2.

L'unité de contrôle/commande 3 est agencée pour commander le déplacement des chariots navettes 6 sur les allées de circulation 5A et 5B entre le point de chargement à l'entrée PE du centre logistique où un colis est chargé sur un chariot navette vide et un point de déchargement de colis, ici à l'extrémité libre de la chute de tri, où le chariot navette 6 est déchargé du colis pour repartir à vide vers le point de chargement à l'entrée PE.

Plus particulièrement, le déplacement des chariots navettes 6 est commandé de telle manière à ce que chaque robot navette 6 chargé avec un colis hors normes HN emprunte l'allée de circulation 5B où il y a la plus grande hauteur H2 sous rampe pour rejoindre la chute de tri et de telle manière à ce que le robot navette qui repart à vide emprunte l'allée de circulation 5A de plus faible hauteur H1 sous rampe pour rejoindre le point de chargement à l'entrée PE.

Comme visible sur la figure 1, les deux allées de circulation sont croisées par des allées de traverses 5C empruntées tant à l'allée qu'au retour par les chariots navettes 6 ce qui autorise un cheminement optimisé des chariots navettes sur la plateforme 5. Sur la figure 1, on a illustré ces allées de traverse 5C en trait interrompu longeant les chute de tri mais il faut considérer que ces allées de traverse 5C s'étendent selon l'invention en-dessous des chutes de tri pour optimiser l'emprise au sol de l'équipement.

A titre d'exemple, pour aller vers la chute de tri de la sortie de tri S3, le chariot navette suit l'allée 5B le long du convoyeur 2 jusqu'à la sortie S3, puis tourne à 90° et longe la chute de la sortie S3 sur l'allée de traverse 5C jusqu'à un point de déchargement du colis hors norme.

Ensuite, le chariot navette 6 à vide remonte l'allée de traverse 5C, puis tourne à 90° pour remonter l'allée de circulation 5A jusqu'au point de chargement PE où il pourra de nouveau être chargé avec un colis hors normes HN.

Cet agencement contribue à automatiser le tri des colis hors normes tout en optimisant l'emprise au sol par l'équipement de tri en centre logistique.

La figure 2, est une vue en coupe transversale de la figure 1 le long d'une chute de tri.

On a illustré sur la figure 2, les allées de circulation 5A,5B,5C.

La figure 2 montre de façon très schématique un chariot navette 6 placé sur l'allée de circulation 5B qui est chargé avec un colis hors normes HN.

Sur l'allée de circulation 5A, on a illustré un autre chariot navette 6 sans colis hors normes. Plusieurs chariots navettes peuvent circuler en même temps sur les allées de circulation 5A,5B et 5C de la plateforme du centre logistique pour augmenter le débit de traitement des colis hors normes avec les chariots navettes 6.

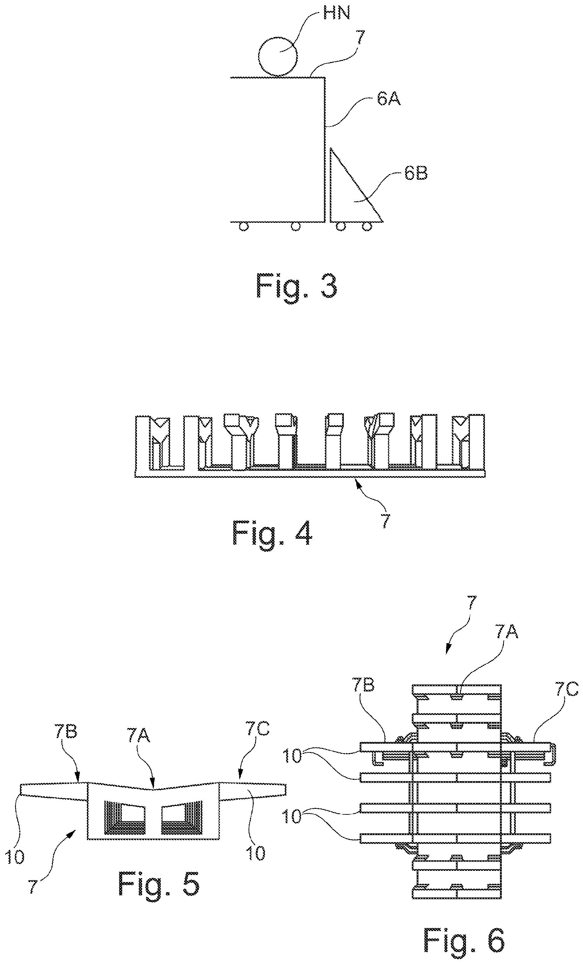

Un chariot navette selon l'invention comprend ici un chariot sur roulettes indiqué par 6A sur les figures 2 et 3 muni d'un plateau 7 adapté pour supporter un colis hors normes HN et un robot navette à roulettes motorisées 6B qui est apte à se déplacer sur le sol de la plateforme en étant commandé à distance sans fil par l'unité de contrôle/commande 5.

Le robot navette est adapté pour accoster le chariot à roulettes de façon à l'entraîner en déplacement sur la plateforme 5 et aussi également pour se désolidariser de celui-ci de façon à le laisser sur place.

Le plateau 7 du chariot navette est montré plus en détail sur les figures 4 à 6.

Comme visible sur ces figures, selon l'invention, le plateau 7 a une forme structurée conçue pour pouvoir porter différents colis hors norme de différentes formes : cylindres allongés ou de grand diamètre, plaques, parallélogrammes etc...

Le plateau 7 comporte une partie centrale 7A en forme de gouttière à section transversale en V et deux parties latérales 7B,7C de part et d'autre de la partie centrale et qui s'étendent dans un même plan horizontal.

La partie centrale 7A en forme de gouttière est adaptée pour porter des colis cylindriques. Les deux parties latérales 7B,7C planes sont adaptées pour porter des colis plats de grandes dimensions.

La gouttière de la partie centrale 7A est disposée en dessous du plan horizontal des parties latérales 7B,7C de sorte qu'un colis plat de grande dimension reposant sur le plan des parties latérales chevauche la gouttière de la partie centrale.

Comme visible plus particulièrement sur les figures 4 et 6, le corps des parties centrale et latérales 7A,7B,7C comprend des membrures 10 formant deux peignes disposés en opposition, les dents des peignes s'étendant parallèlement les unes aux autres de la partie centrale 7A respectivement vers le bord des parties latérales 7B,7C perpendiculairement à la gouttière 7A.

Le corps de la partie centrale 7A peut avoir une structure ajourée comme illustré sur la figure 5.

Comme visible sur les figures 4 et 5, la base du corps de la partie centrale 7A est décalée verticalement du plan horizontal des parties latérales 7B,7C pour permettre un déchargement automatique sur un convoyeur à rouleaux 9 qui alimente un bac de stockage 9 disposé à l'extrémité de la chute de tri 4 pour recueillir aussi les colis mécanisables 1 amenés par cette chute de tri 4.

Dans le bac de stockage 9, les colis mécanisables et les colis hors normes sont donc regroupés pour être chargés ensembles en camion ce qui permet une rationalisation de la manutention des colis en sortie du centre logistique.

## Revendications

1. Chariot navette (6) pour centre logistique de tri de colis comportant un plateau (7) pour porter un colis (HN) à trier, le plateau comportant une partie centrale (7A) en forme de gouttière à section transversale en V et deux parties latérales (7B,7C) de part et d'autre de la partie centrale et qui s'étendent dans un même plan horizontal, **caractérisé en ce que** le corps du plateau comprend des membrures (10) formant deux peignes disposés en opposition, les dents des peignes s'étendant parallèlement les unes aux autres de la partie centrale (7A) du corps respectivement vers le bord des parties latérales (7B,7C).

## Patentansprüche

1. Flurförderzeug (6) für Logistikzentrum zum Sortieren von Packstücken, umfassend eine Platte (7) zum Tragen eines zu sortierenden Packstücks (HN), wobei die Platte einen zentralen Bereich (7A) in Gestalt einer Rinne mit V-förmigem Querschnitt und zwei sich in einer selben horizontalen Ebene erstreckende seitliche Bereiche (7B, 7C) einerseits und andererseits des zentralen Bereichs umfasst,
**dadurch gekennzeichnet,**
**dass** der Korpus der Platte Rippen (10) umfasst, die zwei gegenüberliegend angeordnete Kämme bilden, wobei die Zinken der Kämme sich jeweils parallel zueinander von dem zentralen Bereich (7A) des Korpus jeweils zu dem Rand der seitlichen Bereiche (7B, 7C) erstrecken.

## Claims

1. A shuttle trolley (6) for a parcel-sorting logistics center, which trolley has a deck (7) for carrying a non-standard parcel (HN) to be sorted, the deck having a central portion (7A) in the shape of a trough of V-shaped cross-section, and two side portions (7B, 7C) on either side of the central portion and that both extend in the same horizontal plane, said shuttle trolley being **characterized in that** the body of the deck comprises framework members (10) forming two combs disposed back-to-back, the teeth of the combs extending parallel to one another from the central portion (7A) of the body to the edges of respective ones of the side portions (7B, 7C) .
